# EUROPEAN PATENT SPECIFICATION

(11) **EP 2 703 922 B1**
(45) Date of publication and mention of the grant of the patent: **06.10.2021**
(21) Application number: 13178886.1
(22) Date of filing: 01.08.2013
(51) Int. Cl.: G05B 19/418

(54) **System and method for dynamic control of task assignments in a fabrication process**
System und Verfahren zur dynamischen Steuerung von Aufgabenzuweisungen bei einem Herstellungsprozess
Système et procédé pour une commande dynamique d'attributions de tâche dans un processus de fabrication

(30) Priority: 31.08.2012 US 201213600686
(43) Date of publication of application: 05.03.2014
(73) Proprietor: The Boeing Company, Chicago, IL 60606-1596 (US)
(72) Inventor: Pedigo, Samuel F., Chicago, IL 60606-2016 (US); Shah, Julie A., Chicago, IL 60606-2016 (US); Johnson, Brice A., Chicago, IL 60606-2016 (US)
(74) Representative: Bryn-Jacobsen, Caelia

(56) References cited:
- US-A1- 2005 096 770
- US-A1- 2005 096 957
- US-A1- 2006 190 131
- US-A1- 2008 294 279
- US-B1- 7 580 766
- None

## Description

### FIELD

The present disclosure relates generally to fabrication processes, and more specifically to automated fabrication processes that simultaneously employ a plurality of machines to fabricate a manufactured component.

### BACKGROUND

Automated manufacturing processes may utilize a plurality of machines, such as robots and/or machine tools, to perform a plurality of tasks that are to be completed during the fabrication of a manufactured component. Historically, these automated manufacturing processes have utilized a serial, series, and/or sequential process flow, in which the plurality of tasks is performed and/or completed in a specific, or predefined, order. These sequential process flows may include automated manufacturing processes in which a first machine must complete one or more first tasks that are associated with the fabrication of the manufactured component prior to a second, or subsequent, machine completing one or more second, or subsequent, tasks that are associated with the fabrication of the manufactured component.

More recently, systems and methods have been developed that provide for performing a portion of the plurality of tasks simultaneously by the plurality of machines. However, these systems and methods still assign each task to a respective machine prior to initiation of the plurality of tasks.

In either of the above examples, a rate at which the automated manufacturing process completes and/or finishes fabrication of the manufactured component is controlled, to a large extent, by a subset of the plurality of machines. As an illustrative, non-exclusive example, if a given machine performs its respective tasks more slowly than anticipated, a remainder of the machines must wait for the given machine, thereby increasing machine down time and decreasing a throughput of the automated manufacturing process. As another illustrative, non-exclusive example, if the given machine breaks down, requires maintenance, and/or is otherwise unable to complete a respective task in an allotted time, the entire automated manufacturing process may slow and/or stop until the machine is repaired and/or maintenance is completed. Thus, there exists a need for improved systems and methods of controlling automated manufacturing processes that provide for dynamic control of task assignments that are provided to the plurality of machines.

US 2005/096957 in the abstract states "A method for automated manufacturing job reassignment comprises receiving status and notification data from a workstation controlling a manufacturing machine. A query is executed to determine whether the data indicates the machine has become unavailable. If so, a second query is executed to identify a replacement machine having substantially the same functional capabilities as the machine that has become unavailable. The manufacturing schedule is updated and the workstations controlling operation of the manufacturing machines are notified that jobs previously assigned to the unavailable machine are now to be performed at the identified replacement machine."

US 2005/096770 in the abstract states "To schedule the release of jobs from a pool of pending jobs, machine information and information about items to be processed are used to determine available machine capacity. Available machine capacity is allocated to jobs subject to multiple job release constraints. Allocation may be performed first for any pending jobs which were partially released during a previous time interval, and then to new jobs in decreasing order of determined job rank. If different operative constraints dictate different numbers of units of a job to be released, the minimum number of units meeting each constraint may be released. After the number of units to be released has been determined for a job, machine information is updated to account for available capacity consumed by the release of the selected number of units of the job. Updated information may be used for job release scheduling of the next job."

US 7580766 in the abstract states "A method for manufacturing resource planning includes identifying multiple logical entities within a manufacturing facility; receiving supply information for each of the logical entities, the supply information for a particular logical entity including current and projected future inventories of resources assigned to the particular logical entity for use in manufacturing products; receiving demand information associated with manufacture of a requested product; identifying resources for use in manufacturing the requested product; and scheduling manufacture of the requested product using the identified resources at least one of the logical entities at least partially based on the supply information and the demand information."

The present invention is set out in the independent claims, with some optional features set out in the claims dependent thereto.

### SUMMARY

According to an aspect of the present disclosure there is provided a method of controlling a fabrication process that employs a plurality of machines to fabricate a manufactured component. The method includes executing a plurality of task assignments, which include a plurality of tasks that are to be completed during fabrication of the manufactured component, with an available portion of the plurality of machines by initiating a respective task assignment of the plurality of task assignments with each machine in the available portion of the plurality of machines, monitoring a process variable that defines the available portion of the plurality of machines, and adjusting the plurality of task assignments to create a plurality of adjusted task assignments based, at least in part, on the monitoring. Advantageously the method further includes receiving a work cell layout and a description of the manufactured component, and further wherein the method includes creating a production plan that defines the plurality of tasks, wherein the production plan is based, at least in part, on at least one of the work cell layout and the description of the manufactured component. According to the invention, the method further includes defining the plurality of task assignments, wherein the defining includes selecting which machine of the available portion of the plurality of machines will perform a given task of the plurality of tasks. According to the invention, defining the plurality of task assignments is based on a number of machine-machine interfaces on the manufactured component. Preferably, the defining is based, at least in part, on at least one of: (i) an overall machine idle time during the fabrication process, (ii) a number of idle machines during the fabrication process, (iii) an estimated duration for each task, (iv) a transit time for each machine from a location of a first task to a location of a second task, and (v) avoiding a machine-machine collision. Advantageously, prior to the executing, the method further includes determining the available portion of the plurality of machines. Preferably, the determining includes detecting an operational status of each of the plurality of machines, wherein the operational status includes an available state and an unavailable state, and further wherein the available portion of the plurality of machines includes a portion of the plurality of machines that is in the available state. Advantageously, the method further includes programming each machine in the available portion of the plurality of machines to perform a respective task assignment of the plurality of task assignments. Advantageously, the plurality of machines defines at least one overlapping spatial work zone, and further wherein the adjusting includes assigning a first machine of the plurality of machines to complete at least one task of the plurality of tasks that was initially assigned to another machine of the plurality of machines. Advantageously, the adjusting includes allocating at least one unassigned task of the plurality of tasks to at least one task assignment of the plurality of task assignments to produce the plurality of adjusted task assignments. Advantageously, the adjusting includes re-allocating at least one task of the plurality of tasks to produce a plurality of adjusted task assignments, wherein the re-allocating includes removing the at least one task from a first task assignment of the plurality of task assignments to produce a first adjusted task assignment of the plurality of adjusted task assignments and allocating the at least one task to at least one of a second task assignment of the plurality of task assignments and a new task assignment to produce a second adjusted task assignment of the plurality of adjusted task assignments. Preferably, the re-allocating is based, at least in part, on at least one of: (i) determining that an operational status of a second machine of the plurality of machines that is associated with the second adjusted task assignment has transitioned from an unavailable state to an available state, (ii) determining that an operational status of a first machine of the plurality of machines that is associated with the first adjusted task assignment has transitioned from the available state to the unavailable state, and (iii) optimizing the plurality of adjusted task assignments based, at least in part, on a manufacturing capability of the available portion of the plurality of machines. Advantageously, the adjusting is based, at least in part, upon determining that a fabrication rate of a selected machine of the plurality of machines is different from a projected fabrication rate of the selected machine of the plurality of machines. Advantageously, the adjusting includes dynamically adjusting concurrently with the executing. Advantageously, the monitoring includes determining which machines of the plurality of machines define a presently available portion of the plurality of machines at a given point in time. Advantageously, the method further includes executing the plurality of adjusted task assignments. Advantageously, the method further includes at least one of removing a selected machine from the fabrication process and transitioning the selected machine from an available state to an unavailable state. Advantageously, the method further includes at least one of adding a selected machine to the fabrication process and transitioning the selected machine from an unavailable state to an available state.

According to a further aspect of the present disclosure there is provided a machine controller programmed to control the operation of a plurality of machines using the method above.

According to a still further aspect of the present disclosure there is provided a manufacturing system that includes a plurality of machines, and a machine controller that is programmed to control operation of the plurality of machines during fabrication of a manufactured component by: executing a plurality of task assignments with an available portion of the plurality of machines by initiating a respective task assignment of the plurality of task assignments with each machine in the available portion of the plurality of machines, monitoring a process variable that defines the available portion of the plurality of machines, and adjusting the plurality of task assignments to create a plurality of adjusted task assignments based, at least in part, on the monitoring.

Advantageously, a first machine of the plurality of machines defines a first spatial work zone, wherein a second machine of the plurality of machines defines a second spatial work zone, wherein at least a portion of the first spatial work zone is coextensive with at least a portion of the second spatial work zone, and further wherein the first machine and the second machine are configured for autonomous relative movement.

Systems and methods for the dynamic control of task assignments in a fabrication process that employs a plurality of machines to fabricate a manufactured component. These systems and methods may include executing a plurality of task assignments with an available portion of the plurality of machines, monitoring a process variable that defines the available portion of the plurality of machines, and adjusting the plurality of task assignments to create a plurality of adjusted task assignments based upon the monitoring. The plurality of task assignments may include a plurality of tasks that are to be completed during fabrication of the manufactured component, and the executing may include initiating a respective task assignment of the plurality of task assignments with each machine in the available portion of the plurality of machines, thereby fabricating at least a portion of the manufactured component.

In some embodiments, the systems and methods further may include receiving a work cell layout and/or a description of the manufactured component and creating a production plan that defines the plurality of tasks based, at least in part, on the work cell layout and/or the description of the manufactured component. In some embodiments, the systems and methods further may include defining the plurality of task assignments and/or allocating at least a portion of the plurality of tasks to the plurality of task assignments. In some embodiments, the systems and methods further may include determining and/or establishing the available portion of the plurality of machines. In some embodiments, the plurality of machines defines at least one overlapping spatial work zone.

### BRIEF DESCRIPTION OF THE DRAWINGS

Fig. 1 is a schematic representation of illustrative, non-exclusive examples of a manufacturing system according to the present disclosure that includes a plurality of machines and at least one machine controller.
Fig. 2 is a flowchart depicting illustrative, non-exclusive examples of methods according to the present disclosure of controlling a fabrication process that employs a plurality of machines to fabricate a manufactured component.

### DESCRIPTION

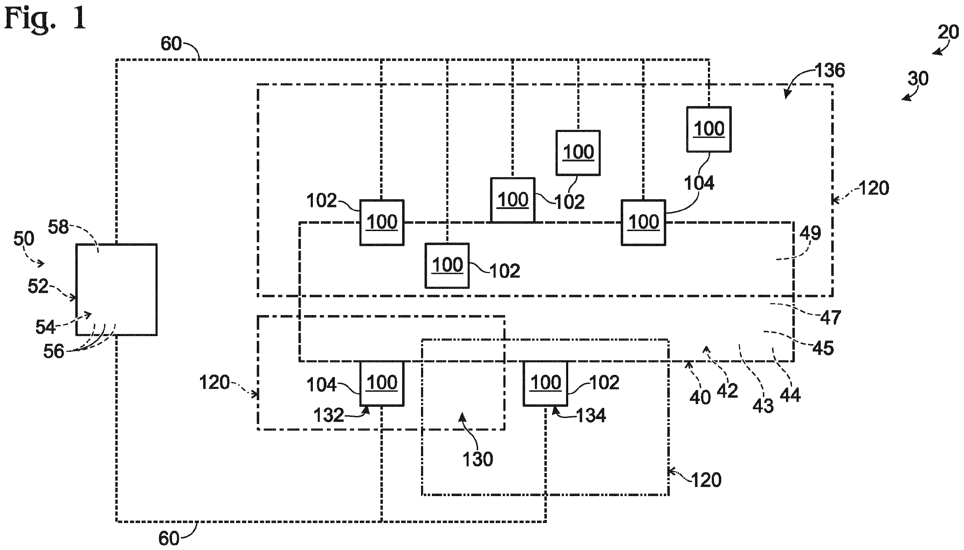

Fig. 1 is a schematic representation of illustrative, non-exclusive examples of a manufacturing system 20 according to the present disclosure that includes a plurality of machines 100 and at least one machine controller 56. In Fig. 1, some elements are illustrated in dashed lines, indicating that such elements correspond to optional versions of manufacturing system 20. That said, not all manufacturing systems 20 according to the present disclosure are required to include all of the elements that are illustrated in solid lines. Furthermore, Fig. 1 provides illustrative embodiments of manufacturing systems 20 according to the present disclosure, and manufacturing systems 20 according to the present disclosure are not limited to the illustrated embodiments.

Machines 100 may work cooperatively during the construction, manufacture, assembly, and/or fabrication of a manufactured component 40, and the operation and/or motion of each of the plurality of machines 100 may be dictated, determined, prescribed, programmed, and/or controlled by one or more machine controllers 56 via a plurality of communication linkages 60. Construction and/or fabrication of manufactured component 40 may include and/or be defined by performance of a plurality of tasks by manufacturing system 20, and these tasks may be allocated, divided, and/or otherwise apportioned into a plurality of task assignments, with different task assignments being performed by different ones of the plurality of machines 100.

Manufacturing system 20 may be adapted, configured, constructed, and/or programmed to provide the task assignments to machines 100 and may function such that at least two machines 100 operate simultaneously to complete at least two task assignments that are associated with fabrication of manufactured component 40. In addition, manufacturing system 20 also may be adapted, configured, constructed, and/or programmed such that, when a first machine 100, which may be associated with and/or assigned a first task assignment, fails to complete the first task assignment, a task assignment of one or more of a remainder of machines 100 may be automatically and/or dynamically adjusted such that the first task assignment, or an incomplete portion thereof, is completed by the remaining machines 100.

As an illustrative, non-exclusive example, and while performing one or more tasks that are associated with the first task assignment, a first machine 100 may be unable, or unavailable, to complete the first task assignment, such as due to failure of the first machine 100, maintenance of the first machine 100, repair of the first machine 100, and/or an inability of the first machine 100 to reach a location of a portion of the first task assignment (such as due to another machine 100 blocking the location and/or the other machine 100 being present between the first machine 100 and the location). Under these conditions, manufacturing system 20 may dynamically and/or automatically re-allocate at least one task from the first task assignment to a second machine 100, thereby continuing the fabrication of manufactured component 40 despite the inability of the first machine 100 to complete the first task assignment.

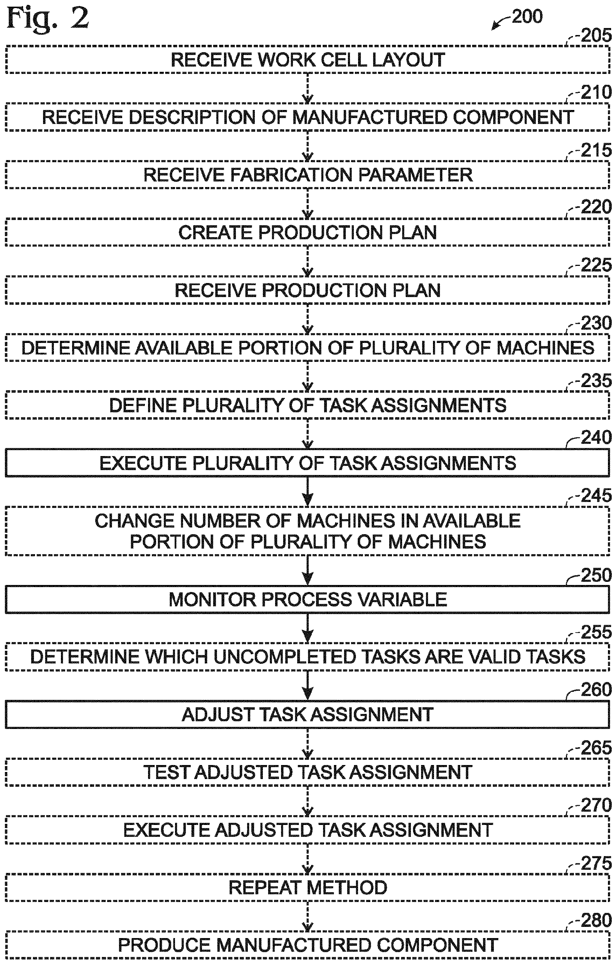

Additionally or alternatively, and when the first task assignment includes a plurality of tasks, manufacturing system 20 also may dynamically and/or automatically re-allocate an incomplete portion of the first task assignment to any suitable number of the plurality of machines 100 that may be adapted, configured, constructed, and/or programmed to complete the incomplete portion of the task assignment. This dynamic and/or automatic re-allocation of task assignments is discussed in more detail herein with reference to methods 200 of Fig. 2.

As a more specific but still illustrative, non-exclusive example, manufactured component 40 may include and/or be a composite structure 42. Composite structure 42 may be formed from a plurality of plies 43, which also may be referred to herein as layers 43, that may be laid-up, or stacked, on top of one another to form the composite structure. Each ply 43 may include one or more courses 44 of a composite material 45 that may be oriented side-by-side within an individual ply 43. Thus, a plurality of courses 44 of composite material 45 may define one ply 43, with a plurality of plies 43 being stacked upon one another to form the completed composite structure 42 and/or an intermediate structure that is formed during fabrication of composite structure 42.

In this embodiment, each course 44 of composite material 45 may correspond to a single task that is to be completed by manufacturing system 20 during fabrication of composite structure 42. Thus, a given machine 100 may be configured and/or programmed to locate and/or place specific, or assigned, courses 44 of composite material 45, with these assigned courses 44 corresponding to a task assignment for a given machine 100. In addition, and as discussed, should the given machine 100 be unable to complete locating and/or placing all of the assigned courses 44, manufacturing system 20 may automatically and/or dynamically re-assign one or more of the courses to one or more other machines 100.

As another more specific but still illustrative, non-exclusive example, manufacturing system 20 may be adapted, configured, constructed, and/or programmed to complete a plurality of machining operations, such as drilling a plurality of holes 47 within manufactured component 40. In this embodiment, each hole 47 may correspond to a single task that is to be completed by manufacturing system 20 during fabrication of manufactured component 40. Thus, a given machine 100 may be configured and/or programmed to drill specific, or assigned, holes 47 within manufactured component 40, with these assigned holes 47 corresponding to the task assignment for the given machine 100. In addition, and as discussed, should the given machine 100 be unable to complete the assigned holes 47, manufacturing system 20 may automatically and/or dynamically re-assign one or more of the holes 47 to one or more other machines 100.

Machines 100 may include any suitable apparatus, system, and/or device that may be utilized during the fabrication of manufactured component 40. This may include any suitable apparatus, system, and/or device that is adapted, configured, constructed, and/or programmed to perform at least one task that is associated with the fabrication of manufactured component 40. As illustrative, non-exclusive examples, machines 100 may include one or more robots, one or more autonomous robots, one or more tools, one or more power tools, and/or one or more machine tools, and it is within the scope of the present disclosure that at least a first portion of machines 100 may be configured for autonomous, or at least substantially autonomous, operation and/or relative movement with respect to a second portion of machines 100.

While Fig. 1 illustrates 8 machines 100 in manufacturing system 20, manufacturing system 20 may include any suitable number of machines 100. As illustrative, non-exclusive examples, manufacturing system 20 may include at least 2, at least 3, at least 4, at least 5, at least 6, at least 8, at least 10, at least 12, at least 15, at least 20, at least 25, or at least 30 machines.

Each machine 100 within manufacturing system 20 may be defined by a plurality of operational states including at least an available state, in which the machine 100 is available and/or able to perform tasks that are associated with the fabrication of manufactured component 40, and an unavailable state, in which the machine 100 is not available and/or able to perform tasks that are associated with the fabrication of manufactured component 40. It is within the scope of the present disclosure that a given machine 100 may be in the unavailable state due to any suitable event and/or condition, illustrative, non-exclusive examples of which include maintenance of the given machine, cleaning of the given machine, repair of the given machine, and/or re-stocking and/or reloading of one or more materials that may be utilized by the given machine during fabrication of manufactured component 40.

It is also within the scope of the present disclosure that manufacturing system 20 may include any suitable number of machines 100 in the available state and/or any suitable number of machines 100 in the unavailable state at any given time during the fabrication of manufactured component 40. As an illustrative, non-exclusive example, and as indicated at 102, the manufacturing system of Fig. 1 includes five machines 100 in the available state. As another illustrative, non-exclusive example, and as indicated in Fig. 1 at 104, the manufacturing system of Fig. 1 further includes three machines 100 in the unavailable state.

It is further within the scope of the present disclosure that any suitable machine 100 may transition from the available state 102 to the unavailable state 104 or from the unavailable state 104 to the available state 102 at any suitable time during fabrication of manufactured component 40. As discussed in more detail herein, manufacturing system 20 may be configured and/or programmed to detect this transition, such as via communication linkage 60, and to adjust the task assignments that are associated with fabrication of manufactured component 40 based thereon.

Additionally or alternatively, manufacturing system 20 also may be configured and/or programmed to assign one or more personnel to manually perform at least a portion of one or more tasks responsive to a given machine 100 transitioning from the available state to the unavailable state. As an illustrative, non-exclusive example, the one or more personnel may be directed to complete a task that was only partially completed by the given machine 100 when the given machine 100 transitioned to the unavailable state. As another illustrative, non-exclusive example, the one or more personnel may be directed to perform one or more entire tasks responsive to the given machine 100 transitioning to the unavailable state.

In manufacturing system 20, each machine 100 includes a spatial work zone 120, which also may be referred to herein as a work zone 120, a work region 120, and/or a work area 120, that defines a region, zone, and/or area in which machine 100 may operate and/or move during the fabrication of manufactured component 40. As shown in Fig. 1, a given spatial work zone 120 of a given machine 100 within manufacturing system 20 may be at least partially coextensive, or overlapping, with another spatial work zone 120 of another machine 100 within manufacturing system 20. This may provide for the re-allocation of tasks that is discussed in more detail herein, since more than one machine 100 may be configured and/or constructed to access and/or perform a given task on a given portion of manufactured component 40. As an illustrative, non-exclusive example, and as indicated in Fig. 1 at 130, a spatial work zone 120 of a first machine 132 (as indicated in dash-dot lines) may partially overlap with, or be partially coextensive with, a spatial work zone 120 of a second machine 134 (as indicated in dash-dot-dot lines). As another illustrative, non-exclusive example, and as indicated in Fig. 1 at 136, a plurality of machines 100 may share a common, or at least substantially common, spatial work zone 120.

At least two machines 100, together with associated machine controllers 56, may define one or more work cells 30, which may be configured to fabricate, or fabricate at least a portion of, manufactured component 40. Work cell 30 may include a specific and/or predetermined layout and/or capability that may be defined by a number of machines 100 within work cell 30, a current location of each of machines 100 within work cell 30, a range of motion of each of machines 100 within work cell 30, and/or a manufacturing capability of each of machines 100 within work cell 30. Thus, work cell 30 and/or the layout thereof may define portion(s) of manufactured component 40 that may be accessed and/or operated on by machines 100 within work cell 30 and/or may define specific manufacturing operations that may be performed on the specific portions(s) of manufactured component 40.

Manufactured component 40 may include any suitable structure that may be fabricated by manufacturing system 20. As illustrative, non-exclusive examples, manufactured component 40 may include, form a portion of, and/or be composite structure 45 and/or an aircraft 49. It is within the scope of the present disclosure that manufactured component 40 defines a single, continuous manufactured component.

Machine controller 56 may include any suitable structure that is configured and/or programmed to control the operation of at least a portion of manufacturing system 20, such as machines 100 thereof. As an illustrative, non-exclusive example, this may include controlling using methods 200 that are discussed in more detail herein with reference to Fig. 2.

Manufacturing system 20 may include any suitable number of machine controllers 56. As an illustrative, non-exclusive example, a single machine controller 56 may control the operation of all machines 100 within manufacturing system 20. As another illustrative, non-exclusive example, manufacturing system 20 may include a plurality of machine controllers 56, with each machine controller 56 controlling the operation of at least one machine 100. As yet another illustrative, non-exclusive example, each machine 100 may include and/or be in communication with a separate and/or dedicated machine controller 56.

Machine controller 56 may include and/or be associated with any suitable structure. As an illustrative, non-exclusive example, machine controller 56 may be included in, form a portion of, and/or be in communication with a computer system 50 that is configured and/or programmed to control the operation of manufacturing system 20 and/or any suitable component thereof. Computer system 50 includes a schedule controller 52 that is configured and/or programmed to generate a production plan. The production plan may define the tasks that are to be completed during fabrication of manufactured component 40 and may be generated based, at least in part, on the work cell layout, a description of the completed manufactured component 40, and/or one or more fabrication parameters that are associated with fabrication of the manufactured component 40.

Computer system 50 also may include a work cell controller 54. Work cell controller 54 may provide an interface between schedule controller 52 and machine controller 56 and may control the operation of one or more work cells 30 within manufacturing system 20. Computer system 50, schedule controller 52, work cell controller 54, and/or machine controller 56 may include any suitable storage medium 58 that may store one or more executable instructions, which, when implemented, may control the operation of any suitable portion of manufacturing system 20. As an illustrative, non-exclusive example, these executable instructions, when executed, may implement methods 200 that are discussed in more detail herein.

Fig. 2 is a flowchart depicting illustrative, non-exclusive examples of methods 200 according to the present disclosure of controlling a fabrication process that employs a plurality of machines to fabricate a manufactured component. In Fig. 2, some steps are illustrated in dashed boxes, indicating that such steps may be optional or may correspond to an optional version of a method according to the present disclosure. That said, not all methods according to the present disclosure are required to include the steps illustrated in solid boxes. In addition, methods and steps illustrated in Fig. 2 are not limiting, and other methods and steps are within the scope of the present disclosure, including methods having greater than or fewer than the number of steps illustrated, as understood from the discussions herein.

As indicated in Fig. 2, methods 200 optionally may include receiving a work cell layout at 205, receiving a description of a manufactured component at 210, receiving a fabrication parameter at 215, and/or creating a production plan at 220. Methods 200 further optionally may include receiving the production plan at 225, determining an available portion of a plurality of machines at 230, and/or defining a plurality of task assignments at 235. Methods 200 include executing the plurality of task assignments at 240 and may include changing a number of machines in the available portion of the plurality of machines at 245. Methods 200 also include monitoring a process variable at 250 and may include determining which uncompleted tasks are valid tasks at 255. Methods 200 further include adjusting a task assignment at 260 and may include testing the adjusted task assignment at 265, executing the adjusted task assignment at 270, repeating the method at 275, and/or producing the manufactured component at 280.

Receiving the work cell layout at 205 may include receiving any suitable work cell layout, illustrative, non-exclusive examples of which are discussed in more detail herein. As illustrative, non-exclusive examples, receiving the work cell layout may include receiving data that represents a number of machines that are present within the work cell, a location of each of the plurality of machines, a range of motion of each of the plurality of machines, and/or a manufacturing capability of each of the plurality of machines. The work cell layout may be received by a computer system, work cell controller, and/or machine controller, illustrative, non-exclusive examples of which are discussed in more detail herein, which is configured and/or programmed to control the operation of the plurality of machines.

Receiving the description of the manufactured component at 210 may include receiving any suitable description of the manufactured component. As illustrative, non-exclusive examples, this may include receiving data that represents a geometry of the manufactured component, such as a computer aided design and/or other spatial representation of the manufactured component. The description of the manufactured component may be received by the computer system, work cell controller, and/or machine controller that is discussed in more detail herein.

Receiving the fabrication parameter at 215 may include receiving any suitable fabrication parameter that is associated with fabrication of the manufactured component. As illustrative, non-exclusive examples, this may include receiving data that represents a machine retraction equation, a machine motion timing sequence, and/or a machine velocity for at least a portion of the plurality of machines and/or for at least a portion of the plurality of tasks to be completed by the plurality of machines. The fabrication parameter may be received by the computer system, work cell controller, and/or machine controller that is discussed in more detail herein.

Creating the production plan at 220 may include creating and/or defining the plurality of tasks that are to be completed by the plurality of machines during fabrication of the manufactured component. As discussed herein, the creating may be based, at least in part, on the work cell layout, the description of the manufactured component, and/or the fabrication parameter. Receiving the production plan at 225 may include receiving the production plan with the computer system, work cell controller, and/or machine controller that is discussed in more detail herein.

Determining the available portion of the plurality of machines at 230 may include determining which machines of the plurality of machines are currently, or presently, available to participate in the fabrication of the manufactured component. As an illustrative, non-exclusive example, this may include detecting an operational state, or status, of the plurality of machines, such as by detecting which machines are in the available operational state and/or which machines are in the unavailable operational state, which are discussed in more detail herein. Thus, the available portion of the plurality of machines may include and/or be defined by a portion of the plurality of machines that is in the available operational state and/or by a portion of the plurality of machines that is not in the unavailable operational state.

Defining the plurality of task assignments at 235 may include allocating a portion of the tasks that are to be completed during fabrication of the manufactured component (or a portion of the tasks that are defined by the production plan) to selected machines of the plurality of machines. This may include allocating the portion of the tasks to the available portion of the plurality of machines and/or selecting which machine in the available portion of the plurality of machines will perform a given task.

It is within the scope of the present disclosure that the task assignments may be defined based upon any suitable criteria. As illustrative, non-exclusive examples, the task assignments may be defined based, at least in part, on a number of machine-machine interfaces on the manufactured component, an overall machine idle time during the manufacturing process, a number of idle machines during the manufacturing process, an estimated duration of each task, and/or a transit time for each machine from a location of a first task to a location of a second task. Additionally or alternatively, the task assignments may be defined to avoid and/or decrease a potential for a machine-machine collision during fabrication of the manufactured component, such as by maintaining at least a minimum distance between any two machines at any given time during the fabrication process.

Machine-machine interfaces may include regions on the manufactured component where a task that is performed by a first machine is adjacent to and/or overlapping with a task that is performed by a second machine. In general, these machine-machine interfaces may represent regions of lower accuracy with respect to a task that is performed by the first machine relative to a task that is performed by the second machine, since spatial machine-machine alignment accuracy may be lower than a spatial accuracy of tasks performed by a given machine. Thus, the plurality of task assignments may be defined and/or selected to decrease the number of machine-machine interfaces on the manufactured component.

Idle time, whether associated with a given machine or an overall machine idle time for the plurality of machines in the manufacturing system, may decrease an efficiency of the fabrication process. Thus, the plurality of task assignments may be defined and/or selected to decrease the overall machine idle time and/or decrease the number of idle machines at any given point in time during the manufacturing process.

It is within the scope of the present disclosure that the plurality of tasks may include a plurality of different tasks. This may include a plurality of operationally similar tasks that may be performed at different locations on the manufactured component and/or a plurality of operationally dissimilar tasks. In either event, a duration, or time duration, of a first task may differ significantly from a duration, or time duration, of a second task. Similarly, the transit time for a given machine from the first task to the second task may be significant relative to the time duration of the task. As such, the manufacturing system may increase the overall efficiency of the manufacturing process by accounting for the difference in duration and/or the transit time when defining the plurality of tasks.

It is within the scope of the present disclosure that the plurality of task assignments may be defined in any suitable manner. As an illustrative, non-exclusive example, defining the plurality of task assignments may include associating at least one task with each task assignment, with the adjusting at 260 and/or the repeating at 275 being utilized to add a subsequent task to respective task assignments at a later time. As another illustrative, non-exclusive example, defining the plurality of task assignments may include associating a respective subset of tasks with each task assignment, with the adjusting at 260 and/or the repeating at 275 being utilized to change the respective subsets, as needed, during the fabrication process. As another illustrative, non-exclusive example, defining the plurality of task assignments may include associating each task that is to be performed during fabrication of the manufactured component to a respective task assignment.

It is also within the scope of the present disclosure that defining the plurality of task assignments at 235 also may include programming each machine in the available portion of the plurality of machines to perform a respective task assignment of the plurality of task assignments. This may include transferring a respective task assignment, or data representing the respective task assignment, to each machine in the available portion of the plurality of machines and/or to a respective machine controller that is associated with each machine in the available portion of the plurality of machines.

Executing the plurality of task assignments at 240 may include executing the plurality of task assignments with the available portion of the plurality of machines. As an illustrative, non-exclusive example, the executing may include initiating a respective task assignment of the plurality of task assignments with each machine in the available portion of the plurality of machines. As additional illustrative, non-exclusive examples, the executing at 240 also may include initiating production of the manufactured component, performing at least a first task with at least one machine, simultaneously performing a plurality of tasks with the available portion of the plurality of machines, instructing at least one machine to move from a first location to a second location, and/or changing a characteristic of the manufactured component. Illustrative, non-exclusive examples of characteristics of the manufactured component include a shape, a size, a volume, a length, a width, a height, a mass, a chemical composition, and/or a surface area of the manufactured component.

As discussed in more detail herein, the machines may include autonomous machines that may be constructed, configured, and/or programmed to operate independently from one another. As such, the executing at 240 also may include moving at least one machine autonomously with respect to at least one other machine.

Changing the number of machines in the available portion of the plurality of machines at 245 may include removing a selected machine from the available portion of the plurality of machines and/or adding a selected machine to the available portion of the plurality of machines. It is within the scope of the present disclosure that the changing at 245 also may include and/or be associated with updating the presently available portion of the plurality of machines, such as by removing the selected machine from or adding the selected machine to the available portion of the plurality of machines.

Removing the selected machine from the available portion of the plurality of machines may include actively and/or passively removing the selected machine. As illustrative, non-exclusive examples, the removing may include removing the selected machine from the fabrication process and/or transitioning the selected machine from the available state to the unavailable state. It is within the scope of the present disclosure that the removing may be based upon and/or caused by any suitable event, illustrative, non-exclusive examples of which include a maintenance event for the selected machine, a predetermined maintenance event for the selected machine, cleaning of the selected machine, repair of the selected machine, material re-load of the selected machine, and/or failure of the selected machine.

Adding the selected machine to the available portion of the plurality of machines may include adding the selected machine to the fabrication process and/or transitioning the selected machine from the unavailable state to the available state. It is within the scope of the present disclosure that the adding may be based upon and/or caused by any suitable event and/or criteria, illustrative, non-exclusive examples of which include completion of at least one maintenance event on the selected machine, completion of a repair on the selected machine, and/or completion of a material re-load on the selected machine.

Monitoring the process variable at 250 may include monitoring any suitable process variable that defines, is associated with, and/or is otherwise indicative of the available portion of the plurality of machines and/or an ability of a given machine to perform a given task. As illustrative, non-exclusive examples, the monitoring may include detecting the operational state, or status, of each of the plurality of machines and/or detecting a process variable that is indicative of the operational status of each of the plurality of machines. As another illustrative, non-exclusive example, the monitoring may include receiving a status signal from each of the plurality of machines and/or querying each of the plurality of machines with the computer system, schedule controller, work cell controller, and/or machine controller to determine the operational status thereof. As yet another illustrative, non-exclusive example, the monitoring may include determining which machines of the plurality of machines define the presently available portion of the plurality of machines at a given point in time. As another illustrative, non-exclusive example, the monitoring and/or the detecting also may include detecting a change in the process variable, such as a change that is indicative of a machine transitioning from the available state to the unavailable state and/or a change that is indicative of the machine transitioning from the unavailable state to the available state. As yet another illustrative, non-exclusive example, the monitoring also may include determining which machine(s) of the available portion of the plurality of machines may perform a given task at a given point in time (such as due to spatial constraints associated with another machine of the plurality of machines being proximal to a location of the given task and/or between the given machine and the given task).

Monitoring the process variable at 250 also may include monitoring a process variable that is indicative of a present work cell layout and/or a present state of completion of the plurality of tasks. As illustrative, non-exclusive examples, this may include monitoring and/or determining a location of at least one of the plurality of machines, a rate at which a selected task is completed by a selected one of the plurality of machines, a difference the between the rate at which the selected task is completed by the selected one of the plurality of machines and projected rate at which the selected task was projected to be completed, and/or a proportion of the production plan, or tasks associated therewith, that has been completed by the manufacturing system at a given point in time.

Additionally or alternatively, monitoring the process variable at 250 also may include anticipating the available portion of the plurality of machines at a future point in time based upon any suitable criteria. As an illustrative, non-exclusive example, the anticipating may include receiving an operator input indicating that a given machine will transition between the available state and the unavailable state at a given future point in time. As another illustrative, non-exclusive example, the anticipating may include calculating an expected available portion of the plurality of machines based, at least in part, on historical data regarding the operation of the plurality of machines, scheduled maintenance of a given machine of the plurality of machines, and/or scheduled repair of the given machine of the plurality of machines.

Determining which uncompleted tasks are valid tasks at 255 may include determining which tasks in an uncompleted portion of the tasks represent valid tasks that may be performed by the machines that define the presently available portion of the plurality of machines. As an illustrative, non-exclusive example, a given task may be located on the manufactured component such that only a single machine of the plurality of machines may be configured and/or programmed for completion thereof. Alternatively, a plurality of machines may be configured and/or programmed for completion of the given task. However, if each machine that may be configured and/or programmed to complete the given task is in the unavailable state (or not in the available portion of the plurality of machines), the given task represents an invalid task, since it may not be completed by the manufacturing system (or may not be completed at a given point in time). However, and at a later time, one or more of the machines that may be configured and/or programmed to complete the given task may transition to the available state. Thus, the given task would represent a valid task at the later time.

Adjusting the plurality of task assignments at 260 may include adjusting the plurality of task assignments to create a plurality of adjusted task assignments based, at least in part, on the monitoring at 250. As an illustrative, non-exclusive example, the adjusting may include allocating at least one unassigned task to at least one task assignment to produce the plurality of adjusted task assignments. As another illustrative, non-exclusive example, the adjusting may include allocating an allocated portion, or all, of the valid tasks to the plurality of adjusted task assignments. It is within the scope of the present disclosure that the adjusting may be based, at least in part, on any suitable criteria, illustrative, non-exclusive examples of which include determining that a fabrication rate of a selected machine is different from a projected fabrication rate of the selected machine and/or determining that a selected machine is closer to a location of a selected task than another machine.

As another illustrative, non-exclusive example, and as discussed in more detail herein, the plurality of machines may define at least one overlapping spatial work zone and the adjusting may include re-allocating at least one task from a first task assignment that is associated with a first machine that is configured to operate in the overlapping spatial work zone to a second task assignment that is associated with a second machine that is configured to operate in the overlapping spatial work zone to produce a first adjusted task assignment and a second adjusted task assignment, respectively. It is within the scope of the present disclosure that the re-allocating may be based upon any suitable criteria. As illustrative, non-exclusive examples, the re-allocating may be based, at least in part, on determining that an operational status of the second machine has transitioned from the unavailable state to the available state, determining that the operational status of the first machine has transitioned from the available state to the unavailable state, determining that the first machine is completing the first task assignment more slowly than expected, and/or determining that the second machine is completing, or has completed, the second task assignment more quickly than expected.

It is within the scope of the present disclosure that the adjusting may include adjusting the plurality of task assignments without changing the production plan, without re-calculating the production plan, without changing any of the plurality of tasks, and/or without replacing a machine that is in the unavailable state. Additionally or alternatively, the adjusting also may include dynamically adjusting the plurality of task assignments. The dynamically adjusting may include adjusting the plurality of task assignments in less than 5 seconds (s), less than 4 s, less than 3 s, less than 2 s, less than 1 s, less than 0.1 s, less than 0.01 s, or less than 0.001 s after the determining at 230. Additionally or alternatively, the dynamically adjusting also may include dynamically adjusting the plurality of task assignments during the executing at 240, dynamically adjusting the plurality of task assignments without ceasing the executing at 240, and/or dynamically adjusting the plurality of task assignments concurrently with the executing at 240.

Testing the plurality of adjusted task assignments at 265 may include determining whether the plurality of adjusted task assignments will result in a collision between two of the machines. As an illustrative, non-exclusive example, this may include simulating, modeling, and/or otherwise predicting a progression of the plurality of adjusted task assignments, such as to determine whether two or more machines in the available portion of the plurality of machines might collide and/or otherwise physically contact one another when performing the plurality of adjusted task assignments. It is within the scope of the present disclosure that the method further may include re-adjusting the plurality of task assignments to create a plurality of re-adjusted task assignments responsive to determining that the plurality of adjusted task assignments will result in a collision between two of the machines.

Executing the plurality of adjusted task assignments at 270 may be substantially similar to the executing at 240, which is discussed in more detail herein. It is within the scope of the present disclosure that the executing at 270 may include executing the plurality of adjusted task assignments with the presently available portion of the plurality of machines, which, as discussed in more detail herein with reference to the determining at 230 and/or the monitoring at 250, may change with time based, at least in part, on one or more machines transitioning between the available state and the unavailable state.

Repeating the method at 275 may include repeating any suitable portion of the method to re-adjust the plurality of task assignments and create a plurality of re-adjusted task assignments, thereby accounting for changes in the specific machines that comprise the available portion of the plurality of machines during a portion, or all, of the fabrication of the manufactured component. It is within the scope of the present disclosure that the method may be repeated any suitable number of times and/or with any suitable temporal frequency, thereby providing for real-time, or near real-time, adjustment of task assignments as the operational status of the machines changes. As illustrative, non-exclusive examples, the repeating may include repeating at least once every 10 minutes (min), every 5 min, every 3 min, every 2 min, every 1 min, every 45 seconds (s), every 30 s, every 20 s, every 15 s, every 10 s, every 5 s, every 4 s, every 3 s, every 2 s, every 1 s, every 0.1 s, every 0.01s, or every 0.001 s. As another illustrative, non-exclusive example, the repeating may include repeating the monitoring the process variable at 250 based upon any suitable temporal frequency, illustrative, non-exclusive examples of which are disclosed above, and repeating the adjusting at 260 responsive to detecting a change in the monitored process variable, such as a change in the available portion of the plurality of machines.

Producing the manufactured component at 280 may include completion of the plurality of tasks, completion of the production plan, completion of the manufactured component, and/or completion of an intermediate structure that is formed during fabrication of the manufactured component. It is within the scope of the present disclosure that the producing further may include forming the manufactured component from a base structure and/or from a plurality of raw materials, thereby changing at least one characteristic of the base structure and/or the raw materials. Illustrative, non-exclusive examples of characteristic of the base structure and/or the raw materials are discussed in more detail herein with reference to characteristics of the manufactured component.

It is within the scope of the present disclosure that the defining at 235 and/or the adjusting at 260 may include defining the plurality of task assignments and/or adjusting the plurality of task assignments based, at least in part, on an optimization of a manufacturing process that may include and/or utilize methods 200 and/or based, at least in part, on a manufacturing capability of each machine in the available portion of the plurality of machines. Illustrative, non-exclusive examples of the manufacturing capability include a location of each machine in the available portion of the plurality of machines, a spatial work zone of each machine in the available portion of the plurality of machines, a rate at which a given machine in the available portion of the plurality of machines completes a give task of the plurality of tasks, and/or an ability, or inability, of a given machine in the available portion of the plurality of machines to complete a given task of the plurality of tasks.

As used herein, the terms "optimization," "optimize," and/or "optimizing" may be relative terms that refer, generally, to improving some aspect of the manufacturing process relative to a similar process (such as a similar process that does not utilize methods 200). Illustrative, non-exclusive examples, of optimization may include increasing an overall accuracy and/or precision of the manufacturing process, increasing an overall efficiency of the manufacturing process, decreasing an overall cost of the manufacturing process, increasing an overall machine utilization during the manufacturing process, decreasing an overall machine idle time during the manufacturing process, decreasing a number of idle machines at a given point in time during the manufacturing process, decreasing an overall energy consumption of the manufacturing process, and/or decreasing an overall raw material utilization of the manufacturing process.

The systems and methods disclosed herein have been presented in the context of a manufacturing system 20 that includes a plurality of machines 100. However, it is within the scope of the present disclosure that these systems and methods also may be utilized in a manufacturing system 20 that includes a single machine 100 and/or in which only a single machine 100 is in the available state. Thus, and as used herein, the phrase "plurality of machines" may be replaced with the phrase "machine" without departing from the scope of the present disclosure.

As an illustrative, non-exclusive example, and when manufacturing system 20 includes a single machine 100 and/or a single machine 100 that is in the available state, manufacturing system 20 and/or any suitable component thereof many be adapted, configured, and/or programmed to select specific tasks to be performed by single machine 100 and/or select an order for the specific tasks to be performed by single machine 100. This may include selecting the specific tasks and/or the order for the specific tasks such that an overall time to complete the selected tasks is decreased, an overall number of transitions between a first type of task and a second type of task is decreased, and/or an overall accuracy and/or precision of a location of a given task of the plurality of tasks relative to a location of a remainder of the tasks of the plurality of tasks is increased.

As used herein, the terms "selective" and "selectively," when modifying an action, movement, configuration, or other activity of one or more components or characteristics of an apparatus, mean that the specific action, movement, configuration, or other activity is a direct or indirect result of user manipulation of an aspect of, or one or more components of, the apparatus.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of' performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A method of controlling a fabrication process that employs a plurality of machines (100) to fabricate a single, continuously manufactured component (40), the method comprising:
defining a plurality of task assignments, wherein the defining includes selecting which machine (100) of an available portion of the plurality of machines (100) will perform a given task of the plurality of tasks and wherein the defining is based on the number of machine-machine interfaces on the manufactured component (40) where machine-machine interfaces include regions on the manufactured component where a task that is performed by a first machine is adjacent to and/or overlapping with a task that is performed by a second machine;
simultaneously executing the plurality of task assignments, which include a plurality of tasks that are to be completed during fabrication of the manufactured component (40), with the selected machines of the available portion of the plurality of machines (100) by initiating a respective task assignment of the plurality of task assignments with each selected machine (100) in the available portion of the plurality of machines (100);
monitoring a process variable that defines the available portion of the plurality of machines (100); and
dynamically adjusting at least one task assignment of the plurality of task assignments to create at least one adjusted task assignment based, at least in part, on the monitoring.

2. The method of claim 1, wherein the method further includes receiving a work cell layout and a description of the manufactured component (40), and further wherein the method includes creating a production plan that defines the plurality of tasks, wherein the production plan is based, at least in part, on at least one of the work cell layout and the description of the manufactured component (40).

3. The method of claim 1, wherein the defining is additionally based, at least in part, on at least one of:
(i) an overall machine idle time during the fabrication process;
(ii) a number of idle machines during the fabrication process;
(iii) an estimated duration for each task of the plurality of tasks; and
(iv) a transit time for each machine (100) from a location of a first task to a location of a second task; and
(vi) avoiding a machine-machine collision.

4. The method of any preceding claim, wherein, prior to the simultaneous executing, the method further includes, prior to defining the plurality of task assignments, determining the available portion of the plurality of machines (100), wherein the determining includes detecting an operational status of each of the plurality of machines (100), wherein the operational status includes an available state (102) and an unavailable state (104), and further wherein the available portion of the plurality of machines (100) includes a portion of the plurality of machines (100) that is in the available state (102).

5. The method of any preceding claim, wherein the method further includes programming each machine (100) in the available portion of the plurality of machines (100) to perform their respective assignments.

6. The method of any preceding claim, wherein the plurality of machines (100) defines at least one overlapping spatial work zone (120), and further wherein the adjusting includes assigning a first machine (132) of the plurality of machines (100) to complete at least one task of the plurality of tasks that was initially assigned to another machine (100) of the plurality of machines (100).

7. The method of any preceding claim, wherein the adjusting includes allocating at least one unassigned task to at least one task assignment of the plurality of task assignments to produce the plurality of adjusted task assignments.

8. The method of any preceding claim, wherein the adjusting includes removing at least one task from a first task assignment of the plurality of task assignments to produce a first adjusted task assignment of the plurality of adjusted task assignments and assigning the removed at least one task to at least one of a second task assignment of the plurality of task assignments and a new task assignment to produce a second adjusted task assignment of the plurality of adjusted task assignments.

9. The method of claim 8, wherein the adjusting is based, at least in part, on at least one of:
(i) determining that an operational status of a second machine (134) of the plurality of machines (100) that is associated with the second adjusted task assignment has transitioned from an unavailable state (104) to an available state (102);
and
(iii) optimizing the plurality of adjusted task assignments based, at least in part, on a manufacturing capability of the available portion of the plurality of machines (100).

10. The method of any preceding claim, wherein the adjusting is based, at least in part, upon determining that a fabrication rate of a selected machine (100) of the plurality of machines (100) is different from a projected fabrication rate of the selected machine (100) of the plurality of machines (100).

11. The method of any preceding claim, wherein the monitoring includes determining which machines (100) of the plurality of machines (100) define a presently available portion of the plurality of machines (100) at a given point in time.

12. The method of any preceding claim, wherein the method further includes at least one of:
removing a selected machine (100) from the fabrication process and transitioning the selected machine (100) from an available state (102) to an unavailable state (104); and
adding a selected machine (100) to the fabrication process and transitioning the selected machine (100) from an unavailable state (104) to an available state (102).

13. A manufacturing system (20) comprising:
a plurality of machines (100); and
a machine controller (56) that is programmed to control simultaneous operation of the plurality of machines (100) during fabrication of a single, continuous manufactured component (40) by:
(i) defining a plurality of task assignments, wherein the defining includes selecting which machine (100) of an available portion of the plurality of machines (100) will perform a given task of the plurality of tasks and wherein the defining is based on a number of machine-machine interfaces on the manufactured component (40) where machine-machine interfaces include regions on the manufactured component where a task that is performed by a first machine is adjacent to and/or overlapping with a task that is performed by a second machine;
(ii) simultaneously executing the plurality of task assignments on the manufactured component with the selected machines of the available portion of the plurality of machines (100) by initiating a respective task assignment of the plurality of task assignments with each selected machine (100) in the available portion of the plurality of machines (100);
(iii) monitoring a process variable that defines the available portion of the plurality of machines (100); and
(iv) adjusting at least one of the plurality of task assignments to create at least one adjusted task assignment based, at least in part, on the monitoring.

14. The manufacturing system of claim 13, wherein a first machine (132) of the plurality of machines (100) defines a first spatial work zone (120), wherein a second machine (134) of the plurality of machines (100) defines a second spatial work zone (120), wherein at least a portion of the first spatial work zone (120) is coextensive with at least a portion of the second spatial work zone (120), and further wherein the first machine (132) and the second machine (134) are configured for autonomous relative movement.

## Patentansprüche

1. Verfahren zum Steuern eines Fertigungsprozesses, der eine Vielzahl von Maschinen (100) verwendet, um eine einzige, kontinuierlich hergestellte Komponente (40) zu fertigen, wobei das Verfahren aufweist:
Definieren einer Vielzahl von Aufgabenzuordnungen, wobei das Definieren das Auswählen aufweist, welche Maschine (100) eines verfügbaren Teils der Vielzahl von Maschinen (100) eine gegebene Aufgabe der Vielzahl von Aufgaben durchführen wird, und wobei das Definieren auf der Anzahl von Maschine-Maschine-Schnittstellen auf der hergestellten Komponente (40) basiert, wobei Maschine-Maschine-Schnittstellen Bereiche auf der hergestellten Komponente aufweisen, an denen eine Aufgabe, die von einer ersten Maschine durchgeführt wird, zu einer Aufgabe, die von einer zweiten Maschine durchgeführt wird, benachbart ist oder diese überschneidet;
gleichzeitiges Ausführen der Vielzahl von Aufgabenzuordnungen, die eine Vielzahl von Aufgaben aufweisen, die während der Fertigung der hergestellten Komponente (40) fertigzustellen sind, mit den ausgewählten Maschinen des verfügbaren Teils der Vielzahl von Maschinen (100) durch Initiieren einer jeweiligen Aufgabenzuordnung der Vielzahl von Aufgabenzuordnungen mit jeder ausgewählten Maschine (100) des verfügbaren Teils der Vielzahl von Maschinen (100);
Überwachen einer Prozessvariablen, die den verfügbaren Teil der Vielzahl von Maschinen (100) definiert; und
dynamisches Anpassen wenigstens einer Aufgabenzuordnung der Vielzahl von Aufgabenzuordnungen, um wenigstens eine angepasste Aufgabenzuordnung wenigstens teilweise auf der Grundlage des Überwachens zu erzeugen.

2. Verfahren nach Anspruch 1, wobei das Verfahren des Weiteren das Empfangen einer Arbeitszellengestaltung und einer Beschreibung der hergestellten Komponente (40) aufweist, und wobei das Verfahren des Weiteren das Aufstellen eines Produktionsplans aufweist, der die Vielzahl von Aufgaben definiert, wobei der Produktionsplan wenigstens teilweise auf wenigstens einem basiert von der Arbeitszellengestaltung und der Beschreibung der hergestellten Komponente (40).

3. Verfahren nach Anspruch 1, wobei das Definieren zusätzlich wenigstens teilweise auf einem basiert von:
(i) einer Gesamt-Maschinenleerlaufzeit während des Fertigungsprozesses;
(ii) einer Anzahl im Leerlauf befindlicher Maschinen während des Fertigungsprozesses;
(iii) einer geschätzten Dauer für jede Aufgabe der Vielzahl von Aufgaben; und
(iv) einer Übergangszeit für jede Maschine (100) von einer Stelle einer ersten Aufgabe zu einer Stelle einer zweiten Aufgabe; und
(vi) Verhindern einer Maschine-Maschine-Kollision.

4. Verfahren nach einem der vorhergehenden Ansprüche, wobei vor dem gleichzeitigen Ausführen das Verfahren des Weiteren aufweist, vor dem Definieren der Vielzahl von Aufgabenzuordnungen, Bestimmen des verfügbaren Teils der Vielzahl von Maschinen (100), wobei das Bestimmen das Ermitteln eines Betriebsstatus jeder der Vielzahl von Maschinen (100) aufweist, wobei der Betriebsstatus einen verfügbaren Zustand (102) und einen nicht verfügbaren Zustand (104) aufweist, und wobei des Weiteren der verfügbare Teil der Vielzahl von Maschinen (100) einen Teil der Vielzahl von Maschinen (100) aufweist, der sich in dem verfügbaren Zustand (102) befindet.

5. Verfahren nach einem der vorhergehenden Ansprüche, wobei das Verfahren des Weiteren das Programmieren jeder Maschine (100) des verfügbaren Teils der Vielzahl von Maschinen (100) aufweist, um ihre jeweiligen Zuordnungen durchzuführen.

6. Verfahren nach einem der vorhergehenden Ansprüche, wobei die Vielzahl von Maschinen (100) wenigstens einen sich überschneidenden räumlichen Arbeitsbereich (120) definiert, und wobei des Weiteren das Anpassen das Zuordnen einer ersten Maschine (132) der Vielzahl von Maschinen (100) aufweist, um wenigstens eine Aufgabe der Vielzahl von Aufgaben fertigzustellen, die anfänglich einer anderen Maschine (100) der Vielzahl von Maschinen (100) zugeordnet war.

7. Verfahren nach einem der vorhergehenden Ansprüche, wobei das Anpassen das Zuordnen wenigstens einer nicht zugeordneten Aufgabe zu wenigstens einer Aufgabenzuordnung der Vielzahl von Aufgabenzuordnungen aufweist, um die Vielzahl angepasster Aufgabenzuordnungen zu erzeugen.

8. Verfahren nach einem der vorhergehenden Ansprüche, wobei das Anpassen das Entfernen wenigstens einer Aufgabe von einer ersten Aufgabenzuordnung der Vielzahl von Aufgabenzuordnungen aufweist, um eine erste angepasste Aufgabenzuordnung der Vielzahl angepasster Aufgabenzuordnungen zu erzeugen, und das Zuordnen der wenigstens einen entfernten Aufgabe zu wenigstens einem von einer zweiten Aufgabenzuordnung der Vielzahl von Aufgabenzuordnungen und einer neuen Aufgabenzuordnung, um eine zweite angepasste Aufgabenzuordnung der Vielzahl angepasster Aufgabenzuordnungen zu erzeugen.

9. Verfahren nach Anspruch 8, wobei das Anpassen wenigstens teilweise auf wenigstens einem basiert von:
(i) Bestimmen, dass ein Betriebsstatus einer zweiten Maschine (134) der Vielzahl von Maschinen (100), die zu der zweiten angepassten Aufgabenzuordnung zugehörig ist, von einem nicht verfügbaren Zustand (104) in einen verfügbaren Zustand (102) übergegangen ist;
und
(iii) Optimieren der Vielzahl angepasster Aufgabenzuordnungen basierend wenigstens teilweise auf einer Produktionsfähigkeit des verfügbaren Teils der Vielzahl von Maschinen (100).

10. Verfahren nach einem der vorhergehenden Ansprüche, wobei das Anpassen wenigstens teilweise auf dem Bestimmen basiert, dass sich eine Produktionsrate einer ausgewählten Maschine (100) der Vielzahl von Maschinen (100) von einer geplanten Produktionsrate der ausgewählten Maschine (100) der Vielzahl von Maschinen (100) unterscheidet.

11. Verfahren nach einem der vorhergehenden Ansprüche, wobei das Überwachen das Bestimmen aufweist, welche Maschinen (100) der Vielzahl von Maschinen (100) einen gegenwärtig verfügbaren Teil der Vielzahl von Maschinen (100) zu einem gegebenen Zeitpunkt definieren.

12. Verfahren nach einem der vorhergehenden Ansprüche, wobei das Verfahren des Weiteren wenigstens eines aufweist von:
Entfernen einer ausgewählten Maschine (100) aus dem Fertigungsprozess und Überführen der ausgewählten Maschine (100) von einem verfügbaren Zustand (102) in einen nicht verfügbaren Zustand (104); und
Hinzufügen einer ausgewählten Maschine (100) zu dem Fertigungsprozess und Überführen der ausgewählten Maschine (100) von einem nicht verfügbaren Zustand (104) in einen verfügbaren Zustand (102).

13. Herstellungssystem (20), das aufweist:
eine Vielzahl von Maschinen (100); und
einen Maschinen-Controller (56) der dazu programmiert ist, den gleichzeitigen Betrieb der Vielzahl von Maschinen (100) während der Fertigung einer einzigen, kontinuierlich hergestellten Komponente (40) zu steuern durch:
(i) Definieren einer Vielzahl von Aufgabenzuordnungen, wobei das Definieren das Auswählen aufweist, welche Maschine (100) eines verfügbaren Teils der Vielzahl von Maschinen (100) eine gegebene Aufgabe der Vielzahl von Aufgaben durchführen wird, und wobei das Definieren auf der Anzahl von Maschine-Maschine-Schnittstellen auf der hergestellten Komponente (40) basiert, wobei Maschine-Maschine-Schnittstellen Bereiche auf der hergestellten Komponente aufweisen, an denen eine Aufgabe, die von einer ersten Maschine durchgeführt wird, zu einer Aufgabe, die von einer zweiten Maschine durchgeführt wird, benachbart ist oder diese überschneidet;
(ii) gleichzeitiges Ausführen der Vielzahl von Aufgabenzuordnungen auf der hergestellten Komponente mit den ausgewählten Maschinen des verfügbaren Teils der Vielzahl von Maschinen (100) durch Initiieren einer jeweiligen Aufgabenzuordnung der Vielzahl von Aufgabenzuordnungen mit jeder ausgewählten Maschine (100) des verfügbaren Teils der Vielzahl von Maschinen (100),
(iii) Überwachen einer Prozessvariablen, die den verfügbaren Teil der Vielzahl von Maschinen (100) definiert; und
(iv) Anpassen wenigstens einer der Vielzahl von Aufgabenzuordnungen, um wenigstens eine angepasste Aufgabenzuordnung wenigstens teilweise auf der Grundlage des Überwachens zu erzeugen.

14. Herstellungssystem nach Anspruch 13, wobei eine erste Maschine (132) der Vielzahl von Maschinen (100) einen ersten räumlichen Arbeitsbereich (120) definiert, wobei eine zweite Maschine (134) der Vielzahl von Maschinen (100) einen zweiten räumlichen Arbeitsbereich (120) definiert, wobei wenigstens ein Teil des ersten räumlichen Arbeitsbereichs (120) mit wenigstens einem Teil des zweiten räumlichen Arbeitsbereichs (120) flächengleich ist, und wobei des Weiteren die erste Maschine (132) und die zweite Maschine (134) für autonome Relativbewegung konfiguriert sind.

## Revendications

1. Procédé de contrôle d'un processus de fabrication qui utilise une pluralité de machines (100) pour fabriquer un seul composant (40) fabriqué en continu, ledit procédé comprenant :
le fait de définir une pluralité d'attributions de tâches, où le fait de définir inclut la sélection de la machine (100), parmi une partie disponible de la pluralité de machines (100), qui va effectuer une tâche donnée parmi la pluralité de tâches, et où le fait de définir est basé sur le nombre d'interfaces machine-machine sur le composant fabriqué (40), où des interfaces machine-machine incluent des régions sur le composant fabriqué, où une tâche qui est effectuée par une première machine est adjacente à une tâche et/ou chevauche une tâche qui est effectuée par une deuxième machine ;
le fait d'exécuter simultanément la pluralité d'attributions de tâches qui incluent une pluralité de tâches qui doivent être achevées au cours de la fabrication du composant fabriqué (40), avec les machines sélectionnées parmi la partie disponible de la pluralité de machines (100), en lançant une attribution de tâches respectives parmi la pluralité d'attributions de tâches, avec chaque machine sélectionnée (100) parmi la partie disponible de la pluralité de machines (100) ;
le fait de surveiller un processus variable qui définit la partie disponible de la pluralité de machines (100) ; et
le fait d'ajuster de façon dynamique au moins une attribution de tâches parmi la pluralité d'attributions de tâches, afin de créer au moins une attribution de tâches ajustée et basée, au moins en partie, sur la surveillance.

2. Procédé selon la revendication 1, où ledit procédé inclut en outre la réception d'une disposition de cellules de travail et d'une description du composant fabriqué (40), et procédé qui inclut en outre la création d'un plan de production qui définit la pluralité de tâches, où le plan de production est basé, au moins en partie, sur au moins l'une ou l'autre de la disposition de cellules de travail et de la description du composant fabriqué (40).

3. Procédé selon la revendication 1, dans lequel le fait de définir est basé de façon additionnelle, au moins en partie, sur au moins l'un ou l'autre :
(i) d'un temps d'arrêt global des machines au cours du processus de fabrication ;
(ii) d'un nombre de machines à l'arrêt au cours du processus de fabrication ;
(iii) d'une durée estimée pour chaque tâche parmi la pluralité de tâches ; et
(iv) d'un temps de passage pour chaque machine (100) passant d'un emplacement d'une première tâche, à un emplacement d'une deuxième tâche ; et
(vi) d'un évitement de collision machine contre machine.

4. Procédé selon l'une quelconque des revendications précédentes, où, avant l'exécution simultanée, le procédé inclut en outre, avant la définition de la pluralité d'attributions de tâches, la détermination de la partie disponible de la pluralité de machines (100), où la détermination inclut la détection d'un état opérationnel de chacune des machines parmi la pluralité de machines (100), où l'état opérationnel inclut un état disponible (102) et un état indisponible (104), et où, en outre, la partie disponible de la pluralité de machines (100) inclut une partie de la pluralité de machines (100) qui est dans l'état disponible (102).

5. Procédé selon l'une quelconque des revendications précédentes, où le procédé inclut en outre une programmation de chaque machine (100) se trouvant dans la partie disponible de la pluralité de machines (100), afin d'effectuer leurs attributions respectives.

6. Procédé selon l'une quelconque des revendications précédentes, dans lequel la pluralité de machines (100) définit au moins une zone de travail spatiale chevauchante (120), et, en outre, procédé dans lequel l'ajustement inclut l'attribution d'une première machine (132) de la pluralité de machines (100), afin d'achever au moins une tâche, parmi la pluralité de tâches, qui a été initialement attribuée à une autre machine (100) de la pluralité de machines (100).

7. Procédé selon l'une quelconque des revendications précédentes, dans lequel l'ajustement inclut l'affectation d'au moins une tâche non assignée, à au moins une attribution de tâches parmi la pluralité d'attributions de tâches, afin de produire la pluralité d'attributions de tâches ajustées.

8. Procédé selon l'une quelconque des revendications précédentes, dans lequel l'ajustement inclut la suppression d'au moins une tâche retirée d'une première attribution de tâches parmi la pluralité d'attributions de tâches, afin de produire une première attribution de tâches ajustée parmi la pluralité d'attributions de tâches ajustées, ledit ajustement incluant l'attribution de l'au moins une tâche supprimée, à au moins l'une ou l'autre d'une deuxième attribution de tâches parmi la pluralité d'attributions de tâches et d'une nouvelle attribution de tâches, afin de produire une deuxième attribution de tâches ajustée parmi la pluralité d'attributions de tâches ajustées.

9. Procédé selon la revendication 8, dans lequel l'ajustement est basé, au moins en partie, sur au moins l'une ou l'autre :
(i) de la détermination du fait qu'un état opérationnel d'une deuxième machine (134) de la pluralité de machines (100), qui est associé à la deuxième attribution de tâches ajustée, est passé d'un état indisponible (104) à un état disponible (102) ;
et
(iii) de l'optimisation de la pluralité d'attributions de tâches ajustées, ladite optimisation étant basée, au moins en partie, sur une capacité de fabrication de la partie disponible de la pluralité de machines (100).

10. Procédé selon l'une quelconque des revendications précédentes, dans lequel l'ajustement est basé, au moins en partie, sur la détermination du fait qu'une cadence de fabrication d'une machine sélectionnée (100) parmi la pluralité de machines (100) est différente d'une cadence de fabrication projetée de la machine sélectionnée (100) parmi la pluralité de machines (100).

11. Procédé selon l'une quelconque des revendications précédentes, dans lequel la surveillance inclut la détermination des machines (100), parmi la pluralité de machines (100), qui définissent à un moment donné une partie - actuellement disponible - de la pluralité de machines (100).

12. Procédé selon l'une quelconque des revendications précédentes, où ledit procédé inclut en outre au moins l'un ou l'autre :
du fait de supprimer une machine sélectionnée (100), retirée du processus de fabrication, et de faire passer la machine sélectionnée (100), d'un état disponible (102) à un état indisponible (104) ; et
du fait d'ajouter au processus de fabrication une machine (100) ayant été sélectionnée et de faire passer la machine sélectionnée (100), d'un état indisponible (104) à un état disponible (102).

13. Système de fabrication (20) comprenant :
une pluralité de machines (100) ; et
un contrôleur de machines (56) qui est programmé pour contrôler le fonctionnement simultané de la pluralité de machines (100) au cours de la fabrication d'un seul composant (40) fabriqué en continu, ledit contrôle étant effectué en :
(i) définissant une pluralité d'attributions de tâches, où le fait de définir inclut la sélection de la machine (100), parmi une partie disponible de la pluralité de machines (100), qui va effectuer une tâche donnée parmi la pluralité de tâches, et où le fait de définir est basé sur le nombre d'interfaces machine-machine sur le composant fabriqué (40), où des interfaces machine-machine incluent des régions sur le composant fabriqué, où une tâche qui est effectuée par une première machine est adjacente à une tâche et/ou chevauche une tâche qui est effectuée par une deuxième machine ;
(ii) exécutant simultanément la pluralité d'attributions de tâches sur le composant fabriqué, avec les machines sélectionnées parmi la partie disponible de la pluralité de machines (100), en lançant une attribution de tâches respectives parmi la pluralité d'attributions de tâches, avec chaque machine sélectionnée (100) parmi la partie disponible de la pluralité de machines (100) ;
(iii) surveillant un processus variable qui définit la partie disponible de la pluralité de machines (100) ; et
(iv) ajustant au moins une attribution de tâches parmi la pluralité d'attributions de tâches, afin de créer au moins une attribution de tâches ajustée et basée, au moins en partie, sur la surveillance.

14. Système de fabrication selon la revendication 13, dans lequel une première machine (132) de la pluralité de machines (100) définit une première zone de travail spatiale (120), système dans lequel une deuxième machine (134) de la pluralité de machines (100) définit une deuxième zone de travail spatiale (120), où au moins une partie de la première zone de travail spatiale (120) est de même étendue qu'au moins une partie de la deuxième zone de travail spatiale (120), et, en outre, système dans lequel la première machine (132) et la deuxième machine (134) sont configurées pour un mouvement relatif autonome.
